# EUROPÄISCHE PATENTANMELDUNG

(11) **EP 0 959 093 A1**
(43) Veröffentlichungstag der Anmeldung: **24.11.1999**
(21) Anmeldenummer: 99109057.2
(22) Anmeldetag: 07.05.1999
(51) Int. Cl.: C08G 73/10, C08G 73/02, C09B 67/46, C09D 5/34

(54) **Pigmentpasten enthaltend hydrophob modifizierte Polyasparaginsäurederivate**

(30) Priorität: 20.05.1998 DE 19822603
(71) Anmelder: Th. Goldschmidt AG, 45127 Essen (DE)
(72) Erfinder: Grüning, Burghard Dr., 45134 Essen (DE); Silber, Stefan Dr., 47804 Krefeld (DE); Simpelkamp, Jörg Dr., 45130 Essen (DE); Weitemeyer, Christian Dr., 45134 Essen (DE)

(57) **Zusammenfassung**

Gegenstand der Erfindung sind wäßrige Pigmentpasten enthaltend hydrophob modifizierte Polyasparaginsäurederivate als Dispergiermittel. Die Erfindung betrifft insbesondere die Verwendung von hydrophob modifizierten Polyasparaginsäurederivaten als Dispergiermittel zur Herstellung wäßriger Pigmentpasten.

## Beschreibung

Gegenstand der Erfindung sind wäßrige Pigmentpasten enthaltend hydrophob modifizierte Polyasparaginsäurederivate als Dispergiermittel. Die Erfindung betrifft insbesondere die Verwendung von hydrophob modifizierten Polyasparaginsäurederivaten als Dispergiermittel zur Herstellung wäßriger Pigmentpasten.

Pigmentpasten im Sinne der vorliegenden Erfindung umfassen Pasten anorganischer und/oder organischer Pigmente oder Füllstoffe in wäßrigen Medien. Netz- und Dispergiermittel erleichtern bei der Herstellung von Farben und Lacken die Einarbeitung von Pigmenten und Füllstoffen, die als wichtige Formulierungsbestandteile das optische Erscheinungsbild und die physikalischchemischen Eigenschaften von Beschichtungen wesentlich bestimmen. Für eine optimale Ausnutzung müssen diese Feststoffe zum einen gleichmäßig in Lacken und Farben verteilt werden, zum anderen muß die einmal erreichte Verteilung stabilisiert werden. Während der Herstellung und Verarbeitung von wäßrigen Pigmentpasten können nun zahlreiche Probleme auftreten:
- schwierige Einarbeitung der Pigmente
- hohe Viskositäten von Farbpasten, Farben und Lacken
- Sedimentbildung
- vertikales Ausschwimmen von Pigmenten (floating)
- horizontales Ausschwimmen von Pigmenten (flooding)
- geringer Glanzgrad
- geringes Deckvermögen
- ungenügende Farbtiefe
- schlecht reproduzierbare Farbtöne
- zu hohe Ablaufneigung von Lacken

Es fehlt daher nicht an Versuchen, wirksame Dispergieradditive für Feststoffe, insbesondere Pigmente zur Verfügung zu stellen. So werden beispielsweise wasserlösliche, hydrophile Polyetherketten aufweisende Polyisocyanat-Additionsprodukte (EP 0 731 148 A), hydrophile Polyurethan-Polyharnstoffe (DE 44 16 336 A), Poly(meth)acrylate (US 3 980 602 A, WO 94/21701 A) sowie spezielle Polyester (WO 94/18260 A) als für diese Zwecke gut geeignete Dispergieradditive beschrieben.

Jedoch sind mit dem Einsatz solcher Produkte auch eine Vielzahl von Nachteilen verbunden. So sind häufig hohe Gehalte an Dispergieradditivzusätzen erforderlich; die erreichbaren Pigmentierungshöhen der Pasten sind unbefriedigend niedrig; die Stabilität der Pasten und damit deren Viskositätskonstanz ist unzureichend, Flockulation und Aggregation lassen sich nicht immer vermeiden; vielfach mangelt es auch an der Farbtonkonstanz nach Lagerung der Pasten sowie an der Kompatibilität zu diversen Bindemitteln. Durch den Einsatz bekannter Dispergieradditive wird in vielen Fällen auch die Wasserfestigkeit von Beschichtungen negativ beeinflußt, zudem wird der bei der Herstellung und Verarbeitung entstehende, unerwünschte Schaum zusätzlich stabilisiert. Ein weiteres Kriterium mit speziell in jüngster Zeit zunehmender Bedeutung ist die Umweltverträglichkeit der Additive.

Der vorliegenden Erfindung lag daher die Aufgabe zugrunde, eine Vielzahl der genannten Nachteile zu überwinden, wobei insbesondere die Viskosität und die Farbstärkeentwicklung während der Herstellung der Pasten und deren Verarbeitung positiv beeinflußt werden sollten.

Überraschenderweise wird die Aufgabe erfindungsgemäß gelöst durch ein oder mehrere hydrophob modifizierte Polyasparaginsäurederivate oder deren Salze und übliche Hilfs- und Zusatzstoffe.

Polyaminosäurederivate, insbesondere Polyasparaginsäure, haben in jüngster Zeit aufgrund ihrer Eigenschaften besondere Aufmerksamkeit gefunden. Es werden unter anderem Anwendungen als biologisch abbaubare Komplexierungsmittel, Inkrustationsinhibitor, Enthärter und Waschmittel-Builder vorgeschlagen. Polyasparaginsäure wird im allgemeinen durch alkalische Hydrolyse der unmittelbaren Synthesevorstufe Polysuccinimid (PSI, Anhydropolyasparaginsäure), dem cyclischen Imid der Polyasparaginsäure gewonnen. PSI kann beispielsweise nach EP 0 578 449 A, WO 92/14753, EP 0 659 875 A oder DE 44 20 642 A aus Asparaginsäure hergestellt werden oder ist beispielsweise nach DE 36 26 672 A, EP 0 612 784 A, DE 43 00 020 A oder US 5 219 952 A aus Maleinsäurederivaten und Ammoniak zugänglich.

Die von verschiedenen Arbeitsgruppen beschriebene Umsetzung von Polysuccinimid mit Aminen führt zu Polyasparaginsäureamiden (Kovacs et al., J. Med. Chem. 1967, 10, 904-7; Neuse, Angew. Makromol. Chem. 1991, 192, 35-50). Neri et al. führen die Ringöffnung von PSI mit Ethanolamin durch und erhalten Hydroxyethylaspartamide (J. Med. Chem. 1973, 16, 893-897, Macromol. Synth. 1982, 8, 25-29). DE 37 00 128 A und EP 0 458 079 A beschreiben die nachfolgende Veresterung derartiger Hydroxyethylderivate mit Carbonsäurederivaten und die Verwendung der Produkte in Ultraschallkontrastmitteln und in Wirkstoffdepotzubereitungen.

DB 195 24 097 A1 beschreibt Veresterungsprodukte der Polyasparaginsäure mit Fettalkoholen. Während homogene Umsetzungsprodukte, hergestellt unter den üblichen Veresterungsbedingungen jedoch nur schwierig hergestellt werden können, sind copolymere hydrophob modifizierte Polyasparaginsäureester auf Basis von Maleinsäuremonoestern und Ammoniak oder auf Basis von Polysuccinimid und Alkoholen leicht zugänglich, wie aus DE 195 45 678 beziehungsweise der EP 96 118 806.7 hervorgeht. Bei derartigen Verbindungen, welche sich vorteilhaft in Netz- und Dispergiermitteln einsetzen lassen, liegen die Seitenketten partiell als freie Carbonsäure- bzw. Carboxylatgruppen vor und sind partiell mit einem oder mehreren Alkoholen mit 1 bis 18 C-Atomen, vorzugsweise mit 8 bis 12 C-Atomen, oder dessen Derivaten verestert.

Beispielsweise können von Polyasparaginsäure abgeleitete Copolymere eingesetzt werden, welche zu wenigstens 75 Mol-% der vorhandenen Einheiten aus Struktureinheiten der allgemeinen Formeln (I) und (II) bestehen, wobei A ein trifunktionelles Kohlenwasserstoffradikal mit 2 C-Atomen der Struktur (A1) oder (A2) ist, 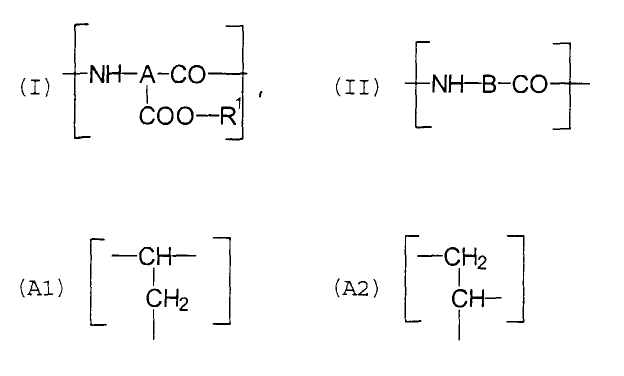
worin R¹ die Bedeutung von R², R³ und R⁴ hat, wobei
R² für ein oder mehrere Reste aus der Gruppe der Alkali-, Erdalkalimetalle, Wasserstoff oder Ammonium, [NR⁵R⁶R⁷R⁸]⁺, worin
R⁵ bis R⁸ unabhängig voneinander Wasserstoff, Alkyl oder Alkenyl mit 1 bis 22 C-Atomen oder Hydroxyalkyl mit 1 bis 22 C-Atomen mit 1 bis 6 Hydroxygruppen ist,
R³ für gleiche oder verschiedene, geradkettige oder verzweigte, gesättigte oder ungesättigte Alkyl- oder Alkenylreste R⁹ mit 6 bis 30 C-Atomen oder Radikale der Struktur -X-R⁹, wobei X eine Oligo- oder Polyoxyalkylenkette mit 1 bis 100 Oxyalkyleneinheiten ist, und
R⁴ für gleiche oder verschiedene, geradkettige oder verzweigte, gesättigte oder ungesättigte Alkyl- oder Alkenylreste mit 1 bis 5 C-Atomen steht,
und wenigstens jeweils ein Rest R¹ die Bedeutung von R² und wenigstens ein Rest R¹ die von R³ oder R⁴ annehmen muß und
die Einheiten der allgemeinen Formel (II) proteinogene oder nicht proteinogene Aminosäuren sind und zu nicht mehr als 20 Gew.-%, bezogen auf die copolymeren Polyasparaginsäurederivate, enthalten sind.

Besonders bevorzugt weist R¹ die Bedeutung von R³ auf.

Die restlichen Einheiten, welche nicht die Struktur (I) oder (II) haben (nicht mehr als 25 Mol-% aller Einheiten), können unter anderem Iminodisuccinat-Einheiten der allgemeinen Formel (III) 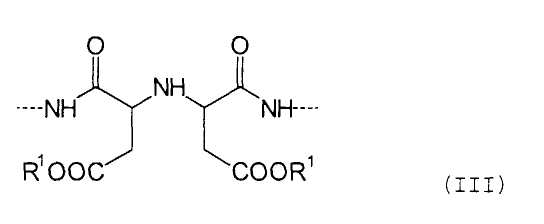 sowie verschiedene Endgruppen sein, am N-Terminus beispielsweise Asparaginsäure-, Maleinsäure-, Fumarsäure- und Äpfelsäureeinheiten sowie deren Ester oder Amide, Maleinimideinheiten oder Diketopiperazine abgeleitet von Asparaginsäure und/oder den Aminosäurebausteinen (II), sowie Ester oder Amide der Aminosäurebausteine (II), am C-Terminus beispielsweise Asparagin- oder Äpfelsäureeinheiten, deren Mono- oder Diester, Amide oder cyclischen Imide.

Alle gegebenen Angaben zur Zusammensetzung der polymeren Produkte beziehen sich wie üblich auf die mittlere Zusammensetzung der Polymerketten.

Als Aminosäurebausteine (II) aus der Gruppe der proteinogenen Aminosäuren kommen beispielsweise Glutamin, Asparagin, Lysin, Alanin, Glycin, Tyrosin, Tryptophan, Serin und Cystein sowie deren Derivate in Frage; nicht proteinogene Aminosäuren können beispielsweise β-Alanin, ω-Amino-1-alkansäuren, wie 6-Aminocapronsäure etc. sein.

Erfindungsgemäß bevorzugt sind Verbindungen, bei denen wenigstens eine freie Carboxylatgruppe (R¹ = H, Metall, Ammonium, Alkylammonium) vorhanden ist, wenigstens ein Rest R³ gleiche oder verschiedene Radikale der Struktur R⁹-X- umfaßt, wobei R⁹ aus der Gruppe der geradkettigen oder verzweigten, gesättigten oder ungesättigten Alkyl- oder Alkenylreste mit 6 bis 18 C-Atomen stammt (beispielsweise verzweigte oder lineare Octyl-, Decyl-, Dodecyl-, Tetradecyl-, Hexadecyl-, Octadecyl-, auch ungesättigte und mehrfach ungesättigte Spezies wie beispielsweise Oleyl) und X eine Polyoxyalkylenkette von 0 bis 100 Alkylenglykoleinheiten bedeutet, vorzugsweise abgeleitet von Ethylenoxid, Propylenoxid oder Gemischen daraus und gegebenenfalls ein Rest R⁴ aus der Gruppe der geradkettigen oder verzweigten, gesättigten oder ungesättigten Alkyl- oder Alkenylreste mit 1 bis 5 C-Atomen stammt (z. B. Methyl, Ethyl, n-Propyl, i-Propyl, n-Butyl, i-Butyl, s-Butyl, n-Pentyl). Eine besonders bevorzugte Form der Copolymeren enthält Alkyl- oder Alkenylreste R⁹ mit 8 bis 12 C-Atomen ohne Alkylenglykolspacer (Alkylenglykolkettenlänge 0), Reste R¹ welche Wasserstoff sind und/oder aus der Gruppe der Alkylamoniumionen stammen beispielsweise abgeleitet von Mono-, Di- oder Triethanolamin, Dimethylethanolamin oder 2-Amino-2-methylpropanol sowie gegebenenfalls geringe Mengen von Alkyl- oder Alkenylresten mit 1 bis 4 C-Atomen.

Erfindungsgemäß weiterhin eingesetzt werden beispielsweise Derivate, welche freie Carboxylatgruppen (R¹ = H, Metall, Ammonium, Alkylammonium) sowie Reste R⁴ mit 3 oder 4 C-Atomen, wie beispielsweise n-Propyl, i-Propyl- sowie die isomeren Butylradikale, und keine Reste des Typs R⁹ oder R⁹-X- mit der obengenannten Bedeutung enthalten.

Derartige Derivate sind beispielsweise durch das in der DB 195 45 678 beziehungsweise der EP 96 118 806.7 beschriebene Herstellverfahren aus Monoestern monoethylenisch ungesättigter Dicarbonsäuren, beispielsweise Maleinsäuremonoestern und Ammoniak zugänglich, gegebenenfalls mit nachfolgender Neutralisation.

Die Herstellung kann mit oder ohne Zusatz von organischen Lösungsmitteln erfolgen. Als Lösungsmittel kommen beispielsweise Alkohole, Ketone, Ester, Oligo- und Poly(alkylen)glykole bzw. -glykolether, Dimethylsulfoxid, Dimethylformamid, N,N-Dimethylacetamid oder N-Methylpyrrolidon sowie deren Gemische und andere in Frage. Bevorzugt eingesetzt werden Alkohole mit 2 bis 4 C-Atomen sowie Ketone wie z. B. Methylisobutylketon oder Methylisoamylketon oder Alkylester von Carbonsäuren mit 1 bis 4 C-Atomen, wie beispielsweise Essigsäure-sec-Butylester oder Essigsäurepentylester. Die Reaktion kann gegebenenfalls in Gegenwart von verträglichkeitsfördernden Agenzien durchgeführt werden. Dieses können grenzflächenaktive Verbindungen sein, beispielsweise Anlagerungsprodukte von 1 bis 30 Mol Ethylenoxid und/oder 0 bis 5 Mol Propylenoxid an C₁₂-C₃₀-Fettalkohole und Wollwachsalkohole; Ethylenoxidanlagerungsprodukte von Glycerinmono- und -diestern und Sorbitanmono- und -diestern von gesättigten und ungesättigten Fettsäuren mit 6 bis 22 C-Atomen; Anlagerungsprodukte von 2 bis 30 Mol Ethylenoxid und/oder 0 bis 5 Mol Propylenoxid an Fettsäuren mit 12 bis 22 C-Atomen und an Alkylphenole mit 8 bis 15 C-Atomen in der Alkylgruppe; C₁₂-C₁₈-Fettsäurepartialester von Anlagerungsprodukten von 1 bis 30 Mol Ethylenoxid an Glycerin; Anlagerungsprodukte von Ethylenoxid an Fette und Öle, beispielsweise Rizinusöl oder gehärtetes Rizinusöl; Partialester von gesättigten oder ungesättigten C₁₂-C₂₂-Fettsäuren, auch verzweigte oder hydroxysubstituierte, mit Polyolen, beispielsweise Ester von Glycerin, Ethylenglykol, Polyalkylenglykolen, Pentaerythrit, Polyglycerin, Zuckeralkoholen wie Sorbit und Polyglucosiden wie Cellulose; Polysiloxan-Polyalkyl-Polyether-Oopolymere und deren Derivate sowie hydrophob modifizierte Polyasparaginsäurederivate, beispielsweise teilveresterte Polyasparaginsäuren, teilveresterte Polyasparaginsäure-co-Glutaminsäuren oder Kondensate aus Maleinsäuremonoestern und Ammoniak, beispielsweise hergestellt nach dem erfindungsgemäßen Verfahren oder nach DE 195 45 678 A, wobei das Herstellungsverfahren der genannten Polyaminosäurederivate keinen Einfluß auf deren verträglichkeitsvermittelnde Wirkung hat. Gegebenenfalls kann auch ein gewisser Teil der Produktmischung im Reaktor verbleiben und als Lösungsvermittler für eine folgende Umsetzung dienen.

Als verträglichkeits- bzw. löslichkeitsvermittelnde Agenzien können auch kationische Tenside, beispielsweise aus der Gruppe der quarternären Ammoniumverbindungen, quarternisierten Proteinhydrolysate, Alkylamidoamine, quarternären Esterverbindungen, quarternären Siliconöle oder quarternären Zucker- und Polysaccharidderivate, anionische Tenside, beispielsweise aus der Gruppe der Sulfate, Sulfonate, Carboxylate sowie Mischungen derselben, beispielsweise Alkylbenzosulfonate, α-Olefinsulfonate, α-sulfonierte Fettsäureester, Fettsäureglycerinestersulfate, Paraffinsulfonate, Alkylsulfate, Alkylpolyethersulfate, Sulfobernsteinsäurealkylester, Fettsäuresalze (Seifen), Fettsäureester der Polymilchsäure, N-Acylaminosäureester, N-Acyltaurate, Acylisethionate, Ethercarboxylate, Monoalkylphosphate, N-Acylaminosäurederivate wie N-Acylasparatate oder N-Acylglutamate, N-Acylsarcosinate, amphotere oder zwitterionische Tenside wie beispielsweise Alkylbetaine, Alkylamidoalkylbetaine des Typs Cocoamidopropylbetain, Sulfobetaine, Phosphobetaine, Sultaine und Amidosultaine, Imidazoliniumderivate, Amphoglycinate, oder nichtionische Tenside wie beispielsweise oxethylierte Fettalkohole, oxethylierte Alkylphenole, oxethylierte Fettsäureester, oxethylierte Mono-, Di- oder Triglyceride oder Polyalkylenglykolfettsäureester, Zuckerester, beispielsweise Fettsäureester der Saccharose, Fructose oder des Methylglucosids, Sorbitolfettsäureester und Sorbitanfettsäureester (gegebenenfalls oxethyliert), Alkyl- oder Alkenylpolyglucoside und deren Ethoxylate, Fettsäure-N-alkylpolyhydroxyalkylamide, Polyglycerinester, Fettsäurealkanolamide, langkettige tertiäre Aminoxide oder Phosphinoxide sowie Dialkylsulfoxide enthalten sein.

Vorzugsweise verbleiben die verträglichkeitsfördernden Agenzien im Produkt. Die Umsetzung zum Copolymeren erfolgt mit wäßrigem oder gasförmigem Ammoniak bei Temperaturen von 20 bis 150 °C, sowie nachfolgender Behandlung bei 70 bis 220 °C, vorzugsweise 100 bis 140 °C, unter vermindertem Druck, beispielsweise in Knetapparaturen, Hochviskosreaktoren, Extrudern oder Rührreaktoren, gegebenenfalls unter Einsatz scherkraftreicher Rührer wie Mig- oder Intermig-Rührer.

Weiterhin können Umsetzungsprodukte von Polyasparaginsäure oder Polysuccinimid mit langkettigen Alkoholen oder die Produkte der Umsetzung von Polyasparaginsäure oder Polysuccinimid mit kurzkettigen Alkoholen, beispielsweise mit 1 bis 5 C-Atomen, nach Umesterung mit langkettigen Alkoholen mit 6 bis 30 C-Atomen eingesetzt werden, gegebenenfalls nach abschließender Hydrolyse, beispielsweise mit Alkalimetall- oder Ammoniumhydroxiden. Derartige Derivate sind in DE 195 45 678 A beziehungsweise der EP 96 118 806.7, beziehungsweise in DE 195 24 097 A1 beschrieben.

Auch können copolymere Polyasparaginsäurederivate eingesetzt werden, welche aus Asparaginsäureeinheiten mit freien Carbonsäure- beziehungsweise Carboxylatseitenketten, aus N-hydroxyalkylsubstituierten Aspartamideinheiten sowie deren Acylierungsprodukten mit langkettigen Carbonsäurederivaten und gegebenenfalls aus restlichen Polysuccinimideinheiten bestehen. Derartige Verbindungen sind durch Hydrolyse, beispielsweise alkalische Hydrolyse, der in EP 0 458 079 A beschriebenen copolymeren Polysuccinimidderivate zugänglich.

Die eingesetzten Polymeren können nachbehandelt werden, beispielsweise durch Behandlung mit Aktivkohle oder anderen Adsorbentien, Bleichung mit Oxidationsmitteln wie H₂O₂,Cl₂,O₃, Natriumchlorit, Natriumhypochlorit etc. oder Reduktionsmitteln wie beispielsweise NaBH₄ oder H₂ in Gegenwart von Katalysatoren.

Gegenstand der vorliegenden Erfindung ist somit der Einsatz von hydrophob modifizierten Polyasparaginsäurederivaten gemäß der nachfolgenden Formel als Dispergiermittel zur Herstellung wäßriger Pigmentpasten. Die Formel gibt die idealisierte Verknüpfung in α-Position wieder, wobei die Produkte wenigstens teilweise auch in β-Verknüpfung vorliegen können. Typische mittlere Zusammensetzungen geeigneter hydrophob modifizierter Polyasparaginsäurederivate sind beispielsweise:

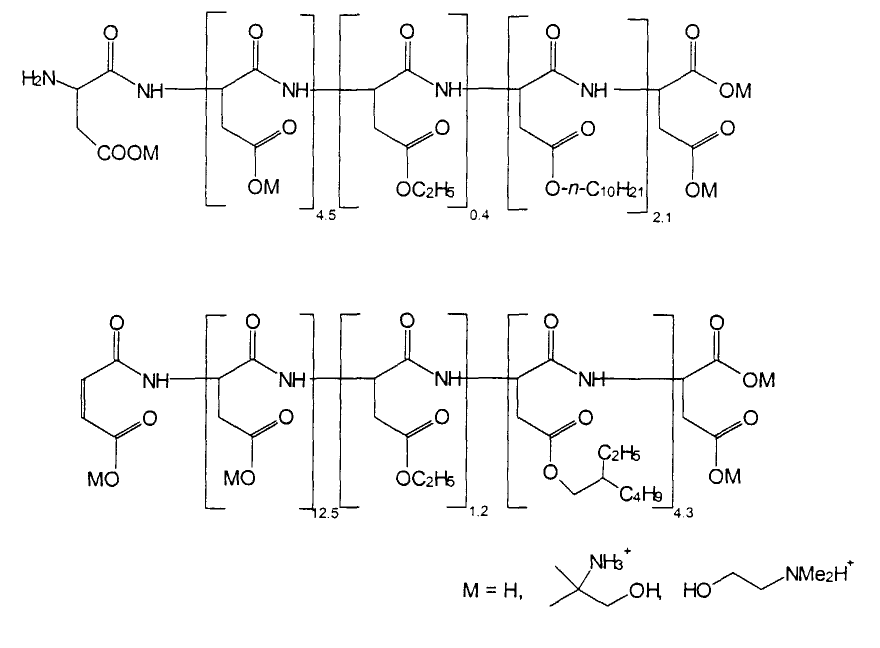

Die erfindungsgemäßen hydrophob modifizierten Polyasparaginsäurederivate werden, soweit nicht bereits als Salz vorliegend, vorteilhaft mit dem Stand der Technik entsprechenden Neutralisationsmitteln, beispielsweise Alkalimetall-, Ammonium- oder Tetraalkylammoniumhydroxiden oder Aminem neutralisiert. Insbesondere bevorzugt ist hier die Verwendung von Dimethylethanolamin oder 2-Amino-2-methylpropanol. Zur Herstellung wäßriger Pigmentpasten werden 0,1 bis 100 Gew.-%, vorzugsweise 0,5 bis 50 Gew.-%, insbesondere 2 bis 15 Gew.-% bezogen auf das Gewicht der Pigmente verwendet. Die hydrophob modifizierten Polyasparaginsäurederivate können bei der erfindungsgemäßen Verwendung entweder vorab mit den zu dispergierenden Pigmenten vermischt werden oder direkt in dem Dispergiermedium (Wasser, eventuelle Glycolzusätze) vor oder gleichzeitig mit der Zugabe der Pigmente und etwaiger anderer Feststoffe gelöst werden. Die Neutralisation kann dabei vor oder während der Herstellung der Pigmentpasten erfolgen. Bevorzugt werden Polyasparaginsäurezubereitungen eingesetzt, welche bereits partiell oder vollständig neutralisiert wurden.

Die erfindungsgemäßen Polyasparaginsäurederivate können auch in beliebigen Gemischen mit weiteren, dem Stand der Technik entsprechenden Dispergieradditiven, beispielsweise aus der Gruppe der Fettsäurealkoxylate, Poly(meth)acrylate, Polyester, Polyether etc., eingesetzt werden.

Als Pigmente können in diesem Zusamenhang beispielsweise anorganische oder organische Pigmente sowie Ruße genannt werden. Als anorganische Pigmente seien exemplarisch genannt Titandioxid und Eisenoxide. In Betracht zu ziehende organische Pigmente sind beispielsweise Azopigmente, Metallkomplex-Pigmente, Phthalocyaninpigmente, anthrachinoide Pigmente, polycyclische Pigmente, insbesondere solche der Thioindigo-, Chinacridon-, Dioxazin-, Pyrrolopyrrol-, Naphthalintetracarbonsäure-, Perylen-, Isoamidolin(on)-, Flavanthron-, Pyranthron- oder Isoviolanthron-Reihe.

Füllstoffe, die beispielsweise in wäßrigen Lacken dispergiert werden können, sind beispielsweise solche auf Basis von Kaolin, Talkum, anderen Silikaten, Kreide, Glasfasern, Glasperlen oder Metallpulvern.

Als Lacksysteme, in denen die erfindungsgemäßen Pigmentpasten aufgelackt werden können, kommen beliebige wäßrige 1K- oder 2K-Lacke in Betracht. Beispielhaft genannt seien wäßrige 1K-Lacke wie beispielsweise solche auf Basis von Alkyd-, Acrylat-, Epoxid-, Polyvinylacetat-, Polyester- oder Polyurethanharzen oder wäßrige 2K-Lacke, beispielsweise solchen auf Basis von hydroxylgruppenhaltigen Polyacrylat- oder Polyesterharzen mit Melaminharzen oder gegebenenfalls blockierten Polyisocyanatharzen als Vernetzer. In gleicher Weise seien auch Polyepoxidharzsysteme genannt.

### Herstellungsbeispiele

### Beispiele 1 bis 3

### Poly(asparaginsäure-co-alkylaspartat)

Die Herstellung der Polyasparaginsäureester erfolgte in Analogie zur DE 195 45 678 A durch Umsetzen der Edukte (Monoethylmaleat, Monoalkylmaleat) in Methylisobutylketon mit 1,0 bis 1,5 Equivalenten an Ammoniakgas und anschließendes Ausdestillieren der Reaktionsmischung im Vakuum bei 110 bis 140 °C für 4 bis 6 h.

| Beispiel | Alkylrest | Edukt: Mol Alkylmaleat | Edukt: Mol Ethylmaleat | Produkt: Mol-% Alkylester | Produkt: Mol-% Ethylester | Mol-% Säure |
|---|---|---|---|---|---|---|
| 1 | Dodecyl | 0,8 | 3,2 | 18 | 9 | 73 |
| 2 | Cetyl | 1,5 | 2,5 | 35 | 4 | 61 |
| 3 | Decyl | 1,0 | 3,0 | 20 | 7 | 73 |

### Beispiele 4 bis 6

### Anwendungstechnische Beispiele

Zur Überprüfung der Wirksamkeit der erfindungsgemäßen Dispergiermittel wurden Pigmentpasten hergestellt. Zur Herstellung der Pigmentpasten wurden die Dispergieradditive 40 %ig in Wasser vorgelöst, der pH-Wert mit 2-Amino-2-methylpropanol auf 8,0 eingestellt, mit Wasser und gegebenenfalls Antischaummitteln gemischt und danach die Pigmente zugegeben. Die Dispergierung erfolgte nach Zugabe von Mahlkörpern (Glaskugeln, 2 bis 3 mm Durchmesser, gleiches Volumen wie die Pigmentpaste) für eine (Titandioxid) beziehungsweise zwei Stunden (sonstige Pigmente) in einem Scandex-Rüttler mit Luftkühlung.

### Formulierung der Weißpasten

### Die Weißpasten wurden wie folgt formuliert

| | (Angaben in Gew.-%): |
|---|---|
| Wasser | 16,4 % |
| erfindungsgemäßes Dispergieradditiv, (Beispiel 1) 40 %ig | 12,3 % |
| Entschäumer (beispielsweise Surfynol® 104, Fa. Air Products) | 1,0 % |
| Titandioxid 2160 (Kronos) | 70,0 % |
| Aerosil® A200 (Degussa) | 0,3 % |

### Formulierung der Schwarzpasten

### Die Schwarzpasten wurden wie folgt formuliert

| | (Angaben in Gew.-%): |
|---|---|
| Wasser | 60,3 % |
| erfindungsgemäßes Dispergieradditiv; (Beispiel 1) 40 %ig | 22,3 % |
| Entschäumer (beispielsweise Surfynol® 104, Fa. Air Products) | 1,0 % |
| 2-Amino-2-Methylpropanol (Angus) | 1,4 % |
| Gasruß FW 200 (Degussa) | 15,0 % |

### Formulierung eines Dispersionsklarlacks

| | (Angaben in Gew.-%): |
|---|---|
| Acrylatdispersion NeoCryl® XK90 (Zeneca) | 97,0 % |
| Texanol® | 3,0 % |

Zur Herstellung grau pigmentierter Lacke wurden je 40,0 g Klarlack vorgelegt, 14,2 g Weißpaste sowie 2,65 g Schwarzpaste zugegeben und bei 1500 Upm 5 min am Dissolver homogenisiert. Die Proben wurden mit 100 µm Naßfilmdicke auf Aluminiumblech aufgerakelt und bei Raumtemperatur getrocknet.

### Test der Pastenstabilitäten

Zur Ermittlung der Pastenstabilitäten wurden bei zwei verschiedenen Schergefällen (20 1/s sowie 1000 1/s) die erreichbaren Anfangsviskositäten sowie die Viskositäten nach vierwöchiger Lagerung bei 25 °C und 50 °C bestimmt. Alle erfindungsgemäßen Weiß- und Schwarzpasten waren durch einen nur geringen Viskositätsanstieg gekennzeichnet, was die gute Stabilität der erfindungsgemäßen Pigmentpasten belegte.

### Test der Dispergiereigenschaften

Nach Aufzug der Testformulierungen mit 100 µm Naßfilmstärke und 6 min Trocknung erfolgte ein Rub-Out-Test auf 1/3 der Fläche. Nach Trocknung über Nacht wurden die Aufzüge mittels eines Spektralphotometers Typ XP68 der Fa. X-Rite farbmetrisch vermessen. Glanzgrad und -schleier wurden mittels Haze-Gloss der Fa. Byk-Gardner bestimmt.

### Dispersionslack auf Basis NeoCryl® XK90

| Beispiel | Probe | Heiligkeit | E nach L Rub-Out | Glanzgrad (60° Winkel) | Haze |
|---|---|---|---|---|---|
| 4 | 1 | 47,5 | 0,3 | 41,0 | 110 |
| 5 | 2 | 47,7 | 0,4 | 40,5 | 120 |
| 6 | 3 | 47,3 | 0,2 | 42,0 | 114 |
| Vergleich | Tego® Dispers 740 W | 48,3 | 0,9 | 40,0 | 120 |

Zu erkennen war die durch den Einsatz der erfindungsgemäßen Dispergieradditive erzielbare günstige Farbstärkeentwicklung sowie der in allen Fällen günstige Rub-Out-Test. Dies wurde insbesondere auch deutlich im Vergleich zu dem kommerziellen, nicht erfindungsgemäßen Fettsäurealkoxylat (Tego® Dispers 740 W, Fa. Tego Chemie Service)

## Patentansprüche

1. Pasten anorganischer und/oder organischer Pigmente oder Füllstoffe in wäßrigen Medien, enthaltend ein oder mehrere hydrophob modifizierte Polyasparaginsäurederivate oder deren Salze und übliche Hilfs- und Zusatzstoffe.

2. Pasten nach Anspruch 1, enthaltend copolymere Polyasparaginsäurederivate, die zu wenigstens 75 Mol-% der vorhandenen Einheiten aus Struktureinheiten der allgemeinen Formeln (I) und (II) 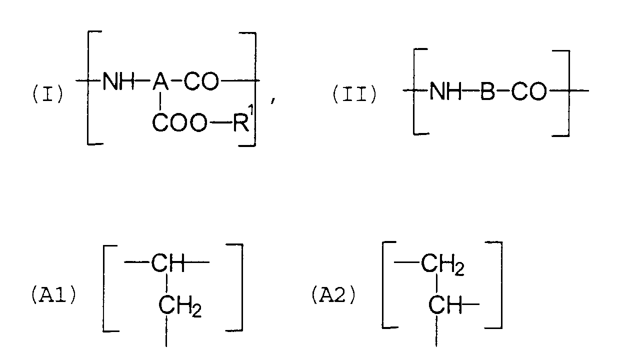 bestehen, wobei A ein trifunktionelles Kohlenwasserstoffradikal mit 2 C-Atomen der Struktur (A1) oder (A2) ist, wobei ein Copolymeres aus mindestens drei Einheiten der Formel (I) besteht, worin
R¹ die Bedeutung von R², R³ oder R⁴ hat, wobei
R² ein oder mehrere Reste aus der Gruppe der Alkali-, Erdalkalimetalle, Wasserstoff oder Ammonium, [NR⁵R⁶R⁷R⁸]⁺ sind, worin R⁵ bis R⁸ unabhängig voneinander Wasserstoff, Alkyl oder Alkenyl mit 1 bis 22 C-Atomen oder Hydroxyalkyl mit 1 bis 22 C-Atomen mit 1 bis 6 Hydroxygruppen bedeuten,
R³ gleiche oder verschiedene, geradkettige oder verzweigte, gesättigte oder ungesättigte Alkyl- oder Alkenylreste R⁹ mit 6 bis 30 C-Atomen oder Radikale der Struktur -X-R⁹ sind, wobei X eine Oligo- oder Polyoxyalkylenkette mit 1 bis 100 Oxyalkyleneinheiten ist, und
R⁴ gleiche oder verschiedene, geradkettige oder verzweigte, gesättigte oder ungesättigte Alkyl- oder Alkenylreste mit 1 bis 5 C-Atomen sind,
und wenigstens jeweils ein Rest R¹ die Bedeutung von R² und wenigstens ein Rest R¹ die von R³ oder R⁴ annehmen muß und die Einheiten der allgemeinen Formel (II) proteinogene oder nicht proteinogene Aminosäuren sind und zu nicht mehr als 20 Gew.-%, bezogen auf die copolymeren Polyasparaginsäurederivate, enthalten sind.

3. Pasten nach Anspruch 2, dadurch gekennzeichnet, daß der Rest R¹ die Bedeutung von R³ aufweist.

4. Pasten nach Anspruch 1 oder 2, enthaltend oberflächenaktive copolymere Polyasparaginsäurederivate aus Asparaginsäureeinheiten mit freien Carboxyl- und Carboxylatresten, aus N-hydroxyalkylsubstituierten Aspartimideinheiten sowie deren Acylierungsprodukten mit Fettsäurederivaten und gegebenenfalls aus weiteren Polysuccinimideinheiten.

5. Pasten nach Anspruch 1 bis 3, enthaltend Polyasparaginsäurederivate, die von den Monoestern α,β-ungesättigter Dicarbonsäuren und Ammoniak, insbesondere von Estern der Maleinsäure, Fumarsäure, oder deren Ammoniumsalzen abgeleitet sind.

6. Pasten nach Anspruch 1, wobei die Polyasparaginsäurederivate mit Aminen und/oder Aminoalkoholen neutralisiert sind.

7. Pasten nach Anspruch 1 bis 6 zur Dispergierung von Titandioxid und Ruß.

8. Pasten nach Anspruch 1 bis 6 zur Dispergierung von Phthalocyaninpigmenten.
